# EUROPÄISCHE PATENTSCHRIFT

(11) **EP 2 266 174 B1**
(45) Veröffentlichungstag und Bekanntmachung des Hinweises auf die Patenterteilung: **29.02.2012**
(21) Anmeldenummer: 09731815.8
(22) Anmeldetag: 07.04.2009
(51) Int. Cl.: H02B 11/24

(54) **SCHUTZVORRICHTUNG GEGEN BERÜHREN ELEKTRISCHER LEITER IN EINER STROMVERTEILEREINHEIT**
PROTECTIVE DEVICE FOR PREVENTING ELECTRICAL CONDUCTORS FROM COMING INTO CONTACT IN A POWER DISTRIBUTOR UNIT
DISPOSITIF DE PROTECTION EMPECHANT LE CONTACT DE CONDUCTEURS ELECTRIQUES DANS UNE UNITE DE DISTRIBUTION DE COURANT

(30) Priorität: 18.04.2008 DE 102008020753
(43) Veröffentlichungstag der Anmeldung: 29.12.2010
(73) Patentinhaber: Siemens Aktiengesellschaft, 80333 München (DE)
(72) Erfinder: HIRSCHFELD, Stefan, 04207 Leipzig (DE)
(86) Internationale Anmeldenummer: PCT/EP2009/054128
(87) Internationale Veröffentlichungsnummer: WO 2009/127558

(56) Entgegenhaltungen:
- GB-A- 1 298 518
- US-A- 5 486 978
- US-B1- 6 326 567

## Beschreibung

Die Erfindung betrifft die konstruktive Gestaltung einer Schutzvorrichtung gegen Berühren elektrischer Leiter in einer Stromverteilereinheit, wobei die Stromverteilereinheit ein Einschubfach und eine in dem Einschubfach verschiebbare elektrische Einschubeinheit aufweist. Diese elektrische Einschubeinheit ist bei unter Spannung stehender Stromverteilereinheit aus dem Einschubfach entnehmbar.

Aus der Druckschrift DE 693 04 818 T2 ist eine Stromverteilereinheit bekannt, die ein Einschubfach in Form eines Grundrahmens, eine in dem Einschubfach aus einer Anfangsposition in eine Endposition verschiebbare elektrische Einschubeinheit in Form eines Trennschalters und eine gattungsgemäße Schutzvorrichtung gegen Berühren elektrischer Leiter in der Stromverteilereinheit aufweist. Die dort gezeigte gattungsgemäße Schutzvorrichtung weist eine im Grundrahmen quer zur Verschiebungsrichtung des Trennschalters aus einer Geschlossen-Stellung in eine Offen-Stellung verschiebbare Schutzplatte in Form einer beweglichen Verschlusslamelle und ein am Trennschalter gehaltenes Betätigungsmittel zum Verschieben der Schutzplatte in Form einer Verschlussbetätigungsplatte auf, wobei die Verschlussbetätigungsplatte beim Verschieben des Trennschalters aus seiner Anfangsposition in seine Endposition über eine Schräge auf einen Betätigungsstift der beweglichen Verschlusslamelle einwirkt und diese anhebt. - Bei dieser bekannten Schutzvorrichtung kehrt die Schutzplatte beim Herausziehen des Trennschalters an sich aufgrund der Wirkung ihres Eigengewichtes in ihre geschlossene Lage zurück. Jedoch können allein schon dem Eigengewicht entgegen gerichtete Stö-βe, wie sie beispielsweise auf Schiffen auftreten, die Wirkung des Eigengewichtes aufheben oder zum Verklemmen der Schutzplatte in ihrer offenen Lage führen und somit ein Verharren der Schutzplatte in ihrer offenen Lage bewirken.

In der US 5,486,978 wird eine Verriegelungsvorrichtung für einen Leistungsschalter beschrieben. Die Vorrichtung umfasst einen beweglichen Verschluss, der rückwärts gedrückt werden kann zur Freigabe von Kontakten.

Ausgehend von einer Schutzvorrichtung mit den Merkmalen des Oberbegriffes des Patentanspruches 1 (DE 693 04 818 T2) liegt der Erfindung die Aufgabe zu Grunde, die Schutzvorrichtung noch sicherer zu gestalten.

Diese Aufgabe wird erfindungsgemäß dadurch gelöst, dass das Betätigungsmittel beim Einschieben der elektrischen Einschubeinheit in das Einschubfach unter der Einwirkung einer Steuerkulisse die in ihrer Geschossen-Stellung befindliche Schutzplatte derart übergreift oder in diese eingreift, dass die Schutzplatte sowohl in Richtung ihrer Offen-Stellung als auch in Richtung ihrer Geschlossen-Stellung in der Bewegungsbahn des Betätigungsmittels liegt, und das Betätigungsmittel beim Herausziehen der elektrischen Einschubeinheit unter der Einwirkung der Steuerkulisse die Schutzplatte erst nach dem Erreichen ihrer Geschlossen-Stellung wieder freigibt, wobei die Schutzplatte im Einschubfach in einer parallel zu der Verschiebungsrichtung der elektrischen Einschubeinheit verlaufenden Ebene verschiebbar ist. Durch diese Ausgestaltung der neuen Schutzvorrichtung ist eine zwangsgeführte Rückführung der Schutzplatte in ihre Geschlossen-Stellung beim Herausziehen der elektrischen Einschubeinheit sichergestellt, so dass ein Berühren der bei geschlossner Schutzplatte hinter dieser Schutzplatte angeordneter elektrischer Leiter bei aus dem Einschubfach entnommener Einschubeinheit sicher verhindert ist.

Bei einer bevorzugten Ausgestaltung der Schutzvorrichtung ist vorgesehen, dass die Schutzplatte eine quer zu ihrer schiebungsrichtung verlaufende Betätigungsnase aufweist, die von dem Betätigungsmittel beim Einschieben der elektrischen Einschubeinheit übergriffen und beim Herausziehen wieder freigegeben wird.

Um die Schutzplatte in ihrer Geschlossen-Stellung und/oder in ihrer Offen-Stellung sicher zu halten ist eine durch ein Sperrmittel bewirkte Verriegelung der Schutzplatte in ihrer Geschlossen-Stellung und/oder in ihrer Offen-Stellung vorgesehen ist, wobei die Verschiebbarkeit der Schutzplatte aus der Geschlossen-Stellung und/oder aus der Offen-Stellung nur bei Aufhebung der Verriegelung gegeben ist und wobei zum Aufheben der Verriegelung der Schutzplatte ein Überführen des Sperrmittels aus einer Sperr-Stellung in eine Freigabe-Stellung erforderlich ist.

Dabei kann das Sperrmittel derart in die Bewegungsbahn des an der Einschubeinheit gehaltenen Betätigungsmittels ragen, dass es beim Einschieben der Einschubeinheit und/oder beim Herausziehen der Einschubeinheit aus seiner Sperr-Stellung in seine Freigabe-Stellung überführbar ist.

Bei einer fertigungstechnisch besonders einfachen Ausgestaltung der Schutzvorrichtung ist das Sperrmittel an der Schutzplatte bewegbar gehalten.

Dabei kann das Sperrmittel als ein Sperrriegel an der Betätigungsnase und die Betätigungsnase selbst als integraler Bestandteil der Schutzplatte federnd an der Schutzplatte angeformt sein.

Die neue Schutzvorrichtung ist auf einfache Weise in Stromverteilereinheiten einsetz- oder nachrüstbar, die ein Einschubfach und eine in dem Einschubfach verschiebbare elektrische Einschubeinheit aufweisen.

Zur Herstellung einer elektrischen Verbindung mit den elektrischen Leitern der Stromverteilereinheit kann die elektrische Einschubeinheit zumindest eine aus einer Trennstellung in eine Kontaktstellung verschiebbare Kontakteinheit aufweisen.
Die neue Schutzvorrichtung ist insbesondere zum Schutz vor Berühren unter Spannung gehaltener elektrischer Leiter oder Kontakteinheiten einer fest am Einschubfach fixierten Verteilungsbaugruppe vorgesehen, an der die Schutzplatte verliersicher gehalten und bei Aufhebung der Verriegelung verschiebbar geführt ist. - Eine derartige, mit einer Schutzplatte gemäß der erfindungsgemäßen Schutzvorrichtung ausrüstbare Verteilungsbaugruppe ist beispielsweise aus der Druckschrift DE 43 13 653 A1 bekannt. Diese Druckschrift beschreibt alle wesentlichen Bestandteile einer Verteilungsbaugruppe sowie ihre Lage und Befestigung an einem horizontalen Fachboden der Stromverteilereinheit.

In bevorzugter Weise können zum Führen der Schutzplatte an der Verteilungsbaugruppe Führungsschienen vorgesehen sein. Dabei kann an zumindest einer der Führungsschienen das Steuermittel in Form einer Steuerkulisse ausgebildet sein. Weiterhin können in zumindest einer der Führungsschienen zum Verriegeln der Schutzplatte in ihrer Geschlossen-Stellung und/oder in ihrer Offen-Stellung eine erste und/oder eine zweite Aussparung zum Verrasten des in seiner Sperr-Stellung befindlichen Sperrmittels ausgebildet sein.

Vorteilhaft ist es, wenn die Verteilungsbaugruppe mit einer Durchtrittsöffnung zum Durchtritt der zumindest einen verschiebbarer Kontakteinheit der elektrische Einschubeinheit versehen ist.

Zur Anpassung an die Anzahl der Kleineinschube, die in einem Einschubfach (einer Zeile) der elektrischen Stromverteilereinheit nebeneinander untergebrachten sind, können an der Verteilungsbaugruppe mehrere Schutzplatten angeordnet sind.

Die neue Schutzvorrichtung ist in den Figuren 1 bis 24 dargestellt.

Dabei zeigen:
Figur 1 eine Stromverteilereinheit mit einer Vielzahl von elektrischen Einschubeinheiten,
Figur 2 einen Ausschnitt der Stromverteilereinheit gemäß der Figur 1 mit einer an einem Fachboden gehaltenen Verteilungsbaugruppe, die ein Feldschienen-System der Stromverteilereinheit kontaktiert und die mit Schutzplatten versehen ist, die aus einer Geschlossen-Stellung in eine Offen-Stellung verschiebbar sind,
Figur 3 die Verteilungsbaugruppe gemäß der Figur 2 geöffnet, mit Kontakten zur Kontaktierung des Feldschienen-Systems und mit Einspeise-/Abgangs- und Steuerverdrahtung für die elektrischen Einschubanordnungen und mit Steckeraufnahmen für Einspeise-/Abgangs- und Steuerstecker,
Figur 4 eine der elektrischen Einschubanordnungen in Form eines Kleineinschubes mit verschiebbaren Kontakteinheiten in Form von Einspeise-/Abgangs- und Steuerstecker,
Figur 5 einen Ausschnitt der Unterseite der in der Figur 2 gezeigten Verteilungsbaugruppe mit Führungsnuten zum Führen der Einschubeinheiten und mit Führungsschienen zum Führen der Schutzplatten,
Figuren 6 und 7 die Verteilungsbaugruppe und einen Teil der elektrischen Einschubeinheit in verschiedenen Lagen beim Einschieben mit einem an der elektrischen Einschubeinheit gehaltenen Betätigungsmittel zum Verschieben der Schutzplatte und mit in ihrer Trennposition bzw. in ihrer Kontaktposition befindlichen Kontakteinheiten,
Figuren 9 bis 22 einen Ausschnitt der in den Figuren 5 bis 7 gezeigten Anordnung in verschiedenen Phasen des Einschieben und des Herausziehens der elektrischen Einschubeinheit,
Figur 23 eine der Schutzplatten und
Figuren 24 und 25 eines der Betätigungsmittel zum Verschieben der Schutzplatten.

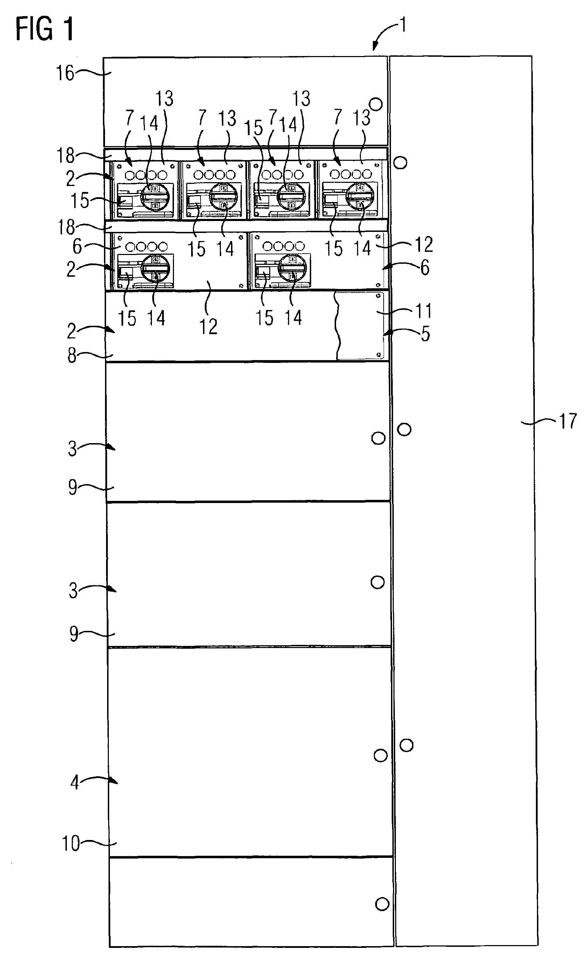

Die Figur 1 zeigt beispielhaft eine Stromverteilereinheit 1 in Form eines Schaltfeldes einer Niederspannungs-Schaltanlage mit insgesamt sechs Einschubfächern 2, 3, 4 (Einschubzeilen) und einer Vielzahl von in den Einschubfächern aufgenommenen elektrischen Einschubeinheiten 5, 6 und 7. Die oberen beiden Einschubfächer 2 sind - wie die darunter liegenden Einschubfächer 2, 3 und 4 - jeweils durch eine frontseitige Schaltfeldtür 8, 9, 10 verschließbar. Die Schaltfeldtür 8 ist dabei gebrochen dargestellt, um die dahinter angeordnete elektrische Einschubeinheit 5 zu zeigen. Bei den elektrischen Einschubeinheiten handelt es sich um Geräteträger in Form von Geräteeinschüben oder Einschubmodulen, die sich entweder im Wesentlichen über die gesamte Breite des jeweiligen Einschubfaches erstrecken (Einschubeinheiten 5 der Größe 1, die auch als Volleinschub bezeichnet werden) oder die sich im Wesentlichen über die Hälfte oder auch nur ein Viertel der Gesamtbreite des jeweiligen Einschubfaches erstrecken (Einschubeinheiten 6 der Größen 1/2 und Einschubeinheiten 7 der Größe 1/4, die auch als Kleineinschub bezeichnet werden).

Im Beispiel der Figur 1 sind die Einschubeinheiten 5, 6, 7 in der Stromverteilereinheit 1 entfernbar aufgenommen. Die Einschubeinheiten 5, 6 bzw. 7 weisen jeweils eine Frontplatte 11, 12 bzw. 13 auf, in welcher jeweils eine aufgenommen ist, so wie es aus der deutschen Patentanmeldung mit dem amtlichen Kennzeichen 10 2007 024 977.4 bekannt ist.

Mit dem Bezugszeichen 14 ist jeweils eine Handhabe bzw. ein Drehgriff zu Drehbetätigung eines im Inneren der Einschubeinheiten angeordneten Hauptschalters bezeichnet. Mit dem Bezugszeichen 15 ist jeweils ein Handschieber bezeichnet, der in einer Geöffnetstellung eine Zugangsöffnung für ein Betätigungswerkzeug zum Einstellen zweier oder mehrerer Schaltstellungen mittels zweier in der Einschubeinheit angeordneter Verfahrmechaniken freigibt. Insbesondere umfassen die Schaltstellungen eine Test-, Betriebs- oder Trennstellung. Die genaue Funktionsweise dieser Verfahrmechaniken ist in der deutschen Patentanmeldung DE 10 2007 032 548.9 beschrieben, so dass an dieser Stelle nicht weiter darauf eingegangen wird.

In der Stromverteilereinheit 1 sind beispielhaft, in der vorliegenden Darstellung jedoch nicht sichtbare einspeisende Hauptsammelschienen im oberen Bereich 16 der Stromverteilereinheit und mit den Hauptsammelschienen verbundene Feldschienen im linken hinteren Bereich der Stromverteilereinheit angeordnet. Rechts von den Einschubfächern befindet sich ein mit einer separaten frontseitigen Tür 17 versehener Raum zur Aufnahme von Kabeln und Leitungen (Kabelanschlussraum), die zu Verbrauchern führen.

Den in einem gemeinsamen Einschubfach 2 nebeneinander untergebrachten elektrischen Einschubeinheiten 6 bzw. 7 in Form von Kleineinschübe der Große 1/2 bzw. 1/4 ist jeweils eine gemeinsame Verteilungsbaugruppe 18 (Adapterplatte) zugeordnet, um die Einschubeinheiten 6, 7 mit den Feldschienen zu verbinden.

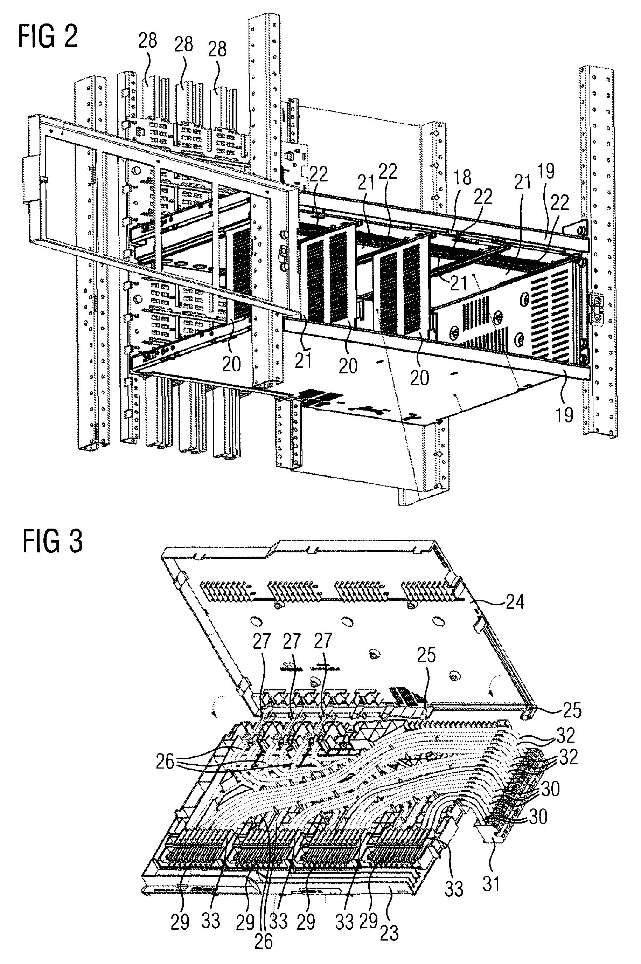

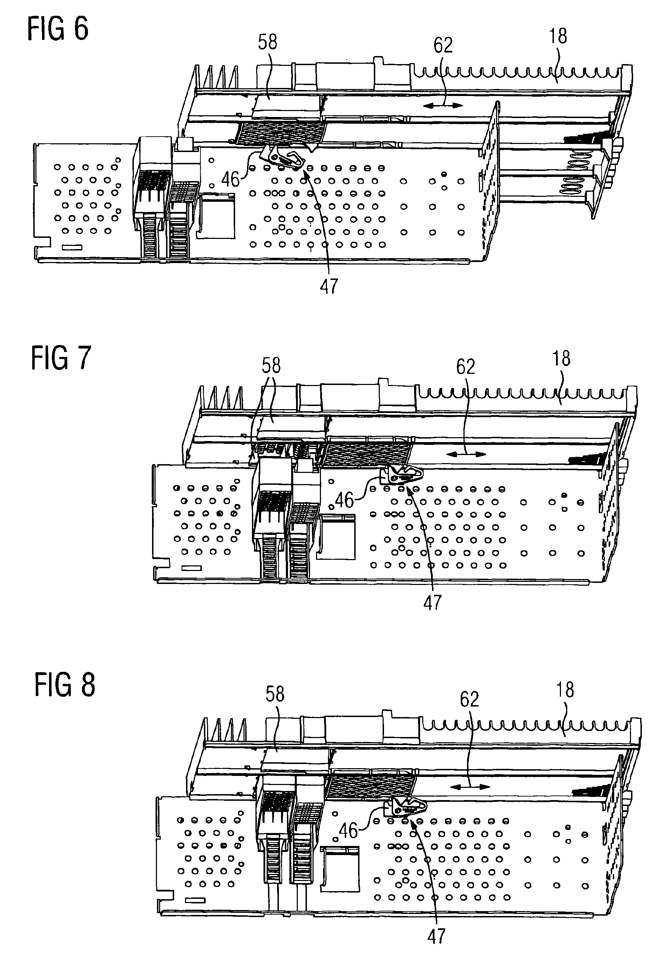

Gemäß der Figur 2 ist die Verteilungsbaugruppe 18 fest an einem die Oberseite des zugeordneten Einschubfaches 2 bildenden Fachbodens 19 fixiert. Dabei ist das gezeigte Einschubfach 2 - abgestimmt auf die Anzahl der darin nebeneinander untergebrachten Einschubeinheiten 6 bzw. 7 - durch mehrere Fach-Trennwände 20 in Teilfächer 21 unterteilt, wobei nicht alle der Fach-Trennwände 20 gezeigt sind. An der Unterseite der Verteilungsbaugruppe 18 sind vier Schutzplatten 22, die auch als Shutterplatten oder Shutter bezeichnet werden, verliersicher gehalten, die bei Aufhebung einer Verriegelung an der Verteilungsbaugruppe 18 verschiebbar geführt sind, so wie dies im Weiteren noch anhand der Figuren 6 bis 22 erläutert wird. Dabei dient jeweils eine der Schutzplatten 22 zum Verschließen jeweils einer Durchtrittsöffnung der Verteilungsbaugruppe.

Gemäß der Figur 3 weist die Verteilungsbaugruppe 18 eine verhältnismäßig flache quaderförmige Grundform auf und besteht aus einem Bodenteil 23 und einem Deckel 24, die beide aus elektrisch isolierendem Kunststoff hergestellt und durch angeformte Haltezungen 25 verbindbar sind. Die Verteilungsbaugruppe 18 (Adapterplatte) besitzt erste biegsame isolierte elektrische Leiter 26, die eine Einspeiseverdrahtung bilden und die jeweils an ihrem einen Ende einen Haupttrennkontakt 27 aufweisen, der eine in der Figur 2 gezeigten Feldschienen 28 kontaktiert, und die an ihrem anderen Ende in eine Haupttrennkontakt-Steckeraufnahme 29 eingesetzt sind. Weiterhin besitzt die Verteilungsbaugruppe 18 (Adapterplatte) zweite biegsame isolierte elektrische Leiter 30 , die eine Abgangsverdrahtung bilden und die an ihrem anderen Ende in die Haupttrennkontakt-Steckeraufnahme 29 und an ihrem anderen Ende in einen Kontaktblock 31 eingesetzt sind, der nach dem Einbau der Verteilungsbaugruppe in den Kabelanschlussraum ragt. Außerdem besitzt die Verteilungsbaugruppe dritte biegsame isolierte elektrische Leiter 32, die eine Steuerverdrahtung bilden und die an ihrem einen Ende in eine Steuerkontakt-Steckeraufnahme 33 und an ihrem anderen Ende in den Kontaktblock 31 eingesteckt sind.

Die Haupttrennkontakt-Steckeraufnahmen 29 und die Steuerkontakt-Steckeraufnahmen 33 sind über Durchtrittsöffnungen im Bodenteil der Verteilungsbaugruppe zugänglich.

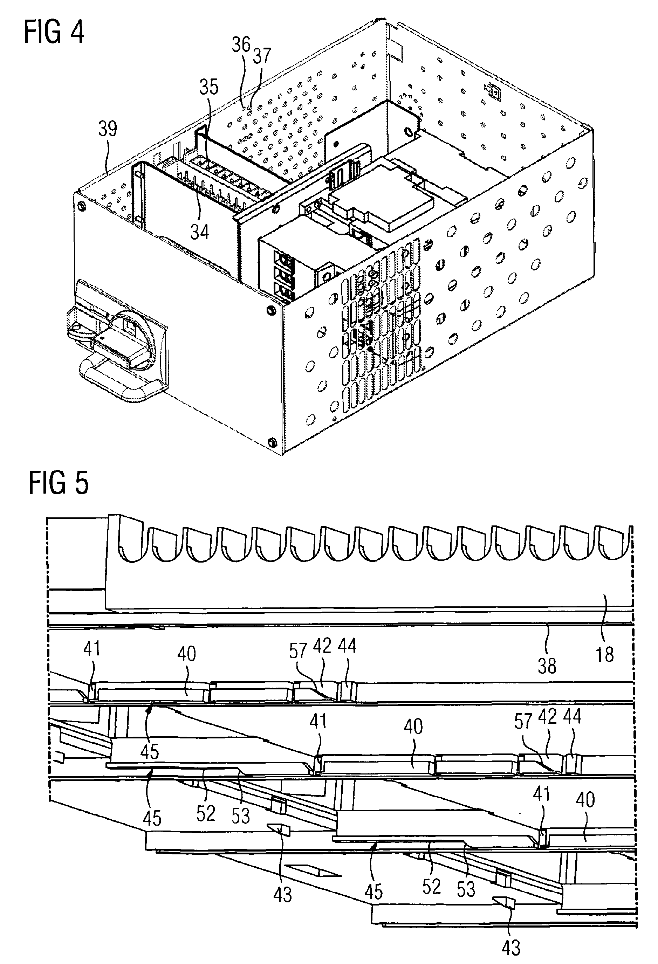

Gemäß der Figur 4 weisen die einzelnen elektrischen Einschubeinheiten aus einer Trennstellung in eine Kontaktstellung verschiebbare Kontakteinheit in Form von Hauptstromsteckern 34 und Steuerstromsteckern 35 auf, die durch die Durchtrittsöffnungen der Verteilungsbaugruppe hindurch in jeweils eine der Haupttrennkontakt-Steckeraufnahmen 29 bzw. Steuerkontakt-Steckeraufnahmen 33 einschiebbar sind.

Die Hauptstromstecker 34 und Steuerstromstecker 35 sind wie oben bereits beschrieben zum Kontaktieren der elektrischen Leiter der Einspeise-/Abgangs- und Steuerverdrahtung mittels zweier im jeweiligen Geräteträger angeordneter Verfahrmechaniken vertikal verfahrbar, so wie dies in der deutschen Patentanmeldung DE 10 2007 032 548.9 beschrieben ist.

FIG 4 zeigt beispielhaft eine der Einschubeinheiten 7 in einer perspektivischen Ansicht. Die gezeigte Einschubeinheit 7 weist ein Viertel der Gesamtbreite des Einschubfaches 2 auf und ist in eine der durch die Fach-Tennwände 20 gebildeten Teilfächer 21 des Einschubfaches 2 einschiebbar. Eine der Seitenwände der Einschubeinheit weist zwei Durchgangslöcher 36, 37 zur Befestigung eines im Weiteren beschriebenen Betätigungsmittels zum Verschieben einer ihr zugeordneten der Schutzplatten 22 auf.

Gemäß der Figur 5 ist die Verteilungsbaugruppe (Adapterplatte) mit Führungsnuten 38 zum Führen der elektrischen Einschubeinheiten 7 versehen, in die jeweils eine der in der Figur 4 gezeigten abgekanteten Seitenwände 39 eines der Einschubeinheiten 7 eingreift. Weiterhin sind an der Verteilungsbaugruppe 18 Führungsschienen 40 ausgebildet, die zum Führen der Schutzplatten 22 dienen, entlang derer sich also die Schutzplatten 22 bewegen können.

Zum Verriegeln der Schutzplatten 22 in ihrer Geschlossen-Stellung und in ihrer Offen-Stellung sind in den jeweils links vom zugeordneten Einschub gelegenen der Führungsschienen 40 eine erste Aussparung 41 und eine zweite Aussparung 42 ausgebildet, die gemeinsam mit einem ersten Anschlag 43 und einem zweiten Anschlag 44 für die Schutzplatte die beiden Endstellungen (Offen-Stellung und Geschlossen-Stellung) der Schutzplatte definieren, da in diese Aussparungen eine gefederte Nase der Schutzplatte 22 einrastet (einfährt), sobald die Schutzplatte 22 beim Verschieben ihre Offen-Stellung oder Geschlossen-Stellung durch Anschlagen an dem jeweiligen der Anschläge 43 bzw. 44 erreicht.

Des Weiteren ist an der jeweiligen Führungsschiene 40 ein Steuermittel 45 in Form einer Steuerkulisse ausgebildet.

Gemäß der Figuren 6 bis 8 bildet jede der Schutzplatten 22 gemeinsam mit einem ihr zugeordneten Betätigungsmittel 46, und mit der ihr zugeordneten Führungsschiene 40, die gleichzeitig die Steuerkulisse zum Steuern des Betätigungsmittels 46 und die Aussparungen zum Verriegeln der Schutzplatte aufweist, jeweils eine Schutzvorrichtung. Diese hier als Ganzes mit 47 bezeichneten Schutzvorrichtungen dienen insbesondere dazu, ein Berühren der in der Stromverteilereinheit 1 angeordneten und durch ihre Verbindung mit den Feldschienen 28 unter Spannung gehaltenen Einspeise-/Abgangsverdrahtung der Verteilungsbaugruppen durch Bedienende sicher auszuschließen.

Das Betätigungsmittel 46 ist so ausgebildet, dass es zum Einen beim Einschieben der elektrischen Einschubeinheit 7 in das Einschubfach 21 unter der Einwirkung des Steuermittels 45 die in ihrer Geschossen-Stellung befindliche Schutzplatte 22 derart übergreift, dass die Schutzplatte 22 sowohl in Richtung ihrer Offen-Stellung als auch in Richtung ihrer Geschlossen-Stellung in der Bewegungsbahn des Betätigungsmittels 46 liegt und dass es zum Anderen beim Herausziehen der elektrischen Einschubeinheit 7 unter der Einwirkung des Steuermittels 45 die Schutzplatte erst nach dem Erreichen ihrer Geschlossen-Stellung wieder freigibt. Dabei ist die Schutzplatte 22 im Einschubfach 2 in einer parallel zu der Verschiebungsrichtung 62 der elektrischen Einschubeinheit 7 verlaufenden Ebene - also parallel zur der mit den Durchtrittsöffnungen versehenen Unterseite der Verteilungsbaugruppe 18 - verschiebbar.

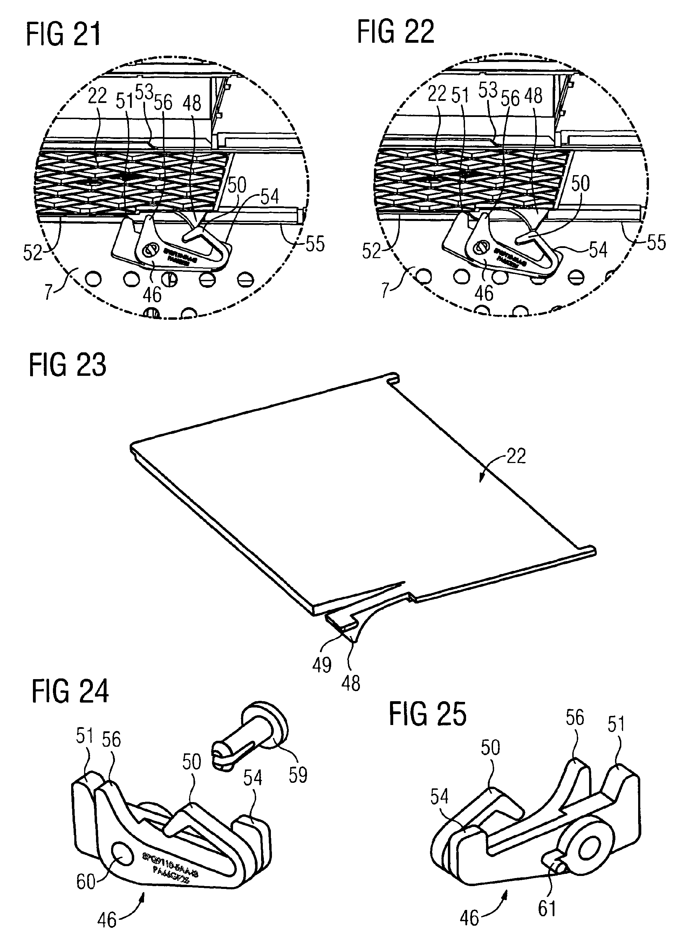

Gemäß der Figur 23 weist jede der Schutzplatten 22 eine Betätigungsnase 48 auf, die quer zur Verschiebungsrichtung 62 verläuft und die von dem Betätigungsmittel 46 beim Einschieben der Einschubeinheit 7 übergriffen und beim Herausziehen wieder freigegeben wird. Wie insbesondere die Figur 23 zeigt, ist die Betätigungsnase 48 integraler Bestandteil der Schutzplatte, da sie federnd an der Schutzplatte angeformt ist.

An der Betätigungsnase 48 ist ein Sperrmittel 49 in Form eines angeformten Sperrriegels ausgebildet, das durch Einrasten in die Aussparungen 41, 42 die bei der neuen Schutzvorrichtung 47 vorgesehene Verriegelung der Schutzplatte in ihrer Geschlossen-Stellung und in ihrer Offen-Stellung, bewirkt.

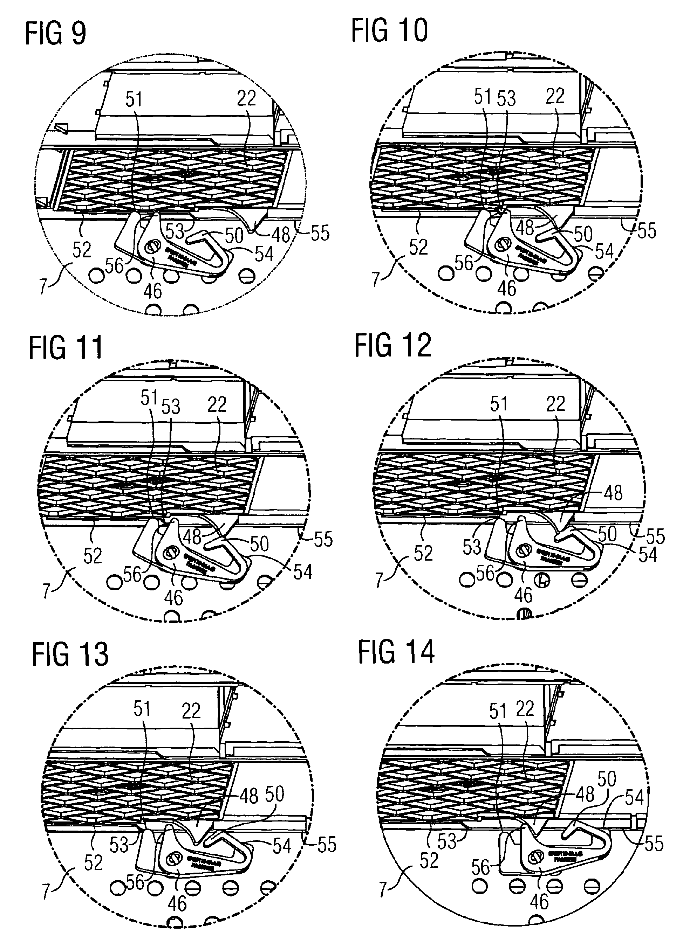

Dabei ist die Verschiebbarkeit der Schutzplatte aus der in der Figur 6 gezeigten Geschlossen-Stellung und/oder aus der in der Figur 7 gezeigten Offen-Stellung nur bei Aufhebung der Verriegelung gegeben. Zum Aufheben dieser Verriegelung der Schutzplatte ist ein Überführen des Sperrmittels 49 aus einer Sperr-Stellung (vgl. Figuren 6 und 7 bzw. 9 und 10) in eine Freigabe-Stellung (vgl. Figuren 13 bis 16 sowie 19 und 20) erforderlich ist. Dadurch ist sichergestellt, dass sich die Schutzplatte 22 weder aus ihrer in den Figuren 6 und 9 bis 13 gezeigten Geschlossen-Stellung, noch aus ihrer in den Figuren 8, 17 und 18 gezeigten Offen-Stellung selbständig heraus bewegen kann.

Die Betätigungsnase 48 an der das Sperrmittel 49 angeformt ist, ragt bei der in den Figuren 6 und 9 gezeigten Geschlossen-Stellung der Schutzplatte 22, derart in die Bewegungsbahn des an der Einschubeinheit 7 gehaltenen Betätigungsmittels 46, dass sie selbst und damit auch das Sperrmittel 49 beim Einschieben der Einschubeinheit und beim Herausziehen der Einschubeinheit aus der Sperr-Stellung in die Freigabe-Stellung überführt wird.

Die Figuren 9 bis 13 zeigen, wie das Betätigungsmittel 46 in einer ersten Phase des Einschiebens der elektrischen Einschubeinheit 7 die Betätigungsnase 48 der Schutzplatte 22 übergreift.

In dieser ersten Phase fährt eine erste Nase 50 des Betätigungsmittels (des Shuttermitnehmers) unter der gefederten Nase 48 der Schutzplatte 22 hindurch, wobei eine erste Anschlagfläche 51 des Betätigungsmittels an einem ersten Kulissenabschnitt 52 der Steuerkulisse entlang gleitet. Durch einen gegenüber dem ersten Kulissenabschnitt 52 nach unten vorspringenden zweiten Kulissenabschnitt 53 wird beim weiteren Hereinschieben der Einschubeinheit 7 gemäß der Figuren 12 und 13 nun die erste Nase 51 des Betätigungsmittels 46 soweit nach oben geschwenkt, bis eine zweite Anschlagfläche 54 des Betätigungsmittels an einem dritten Kulissenabschnitt 55 der Steuerkulisse entlang gleitet.

Gemäß der Figur 14 ragt nunmehr die Betätigungsnase 48 der Schutzplatte in die Bewegungsbahn der zweiten Nase 56 des Betätigungsmittels. Somit wirkt in einer in der Figur 14 dargestellten zweiten Phase des Einschiebens der Einschubeinheit 7 die zweite Nase 56 des Betätigungsmittels auf die gefederte Betätigungsnase 48 der Schutzplatte 22 und hebt diese soweit an, dass das an der Betätigungsnase angeformte Sperrmittel 49 in Form des Sperrriegels aus der ersten 41 der Aussparungen heraus gehoben wird. Die Schutzplatte ist nunmehr aus ihrer Sperrstellung freigegeben. Die Sperrung der Schutzplatte 22 ist also aufgehoben.

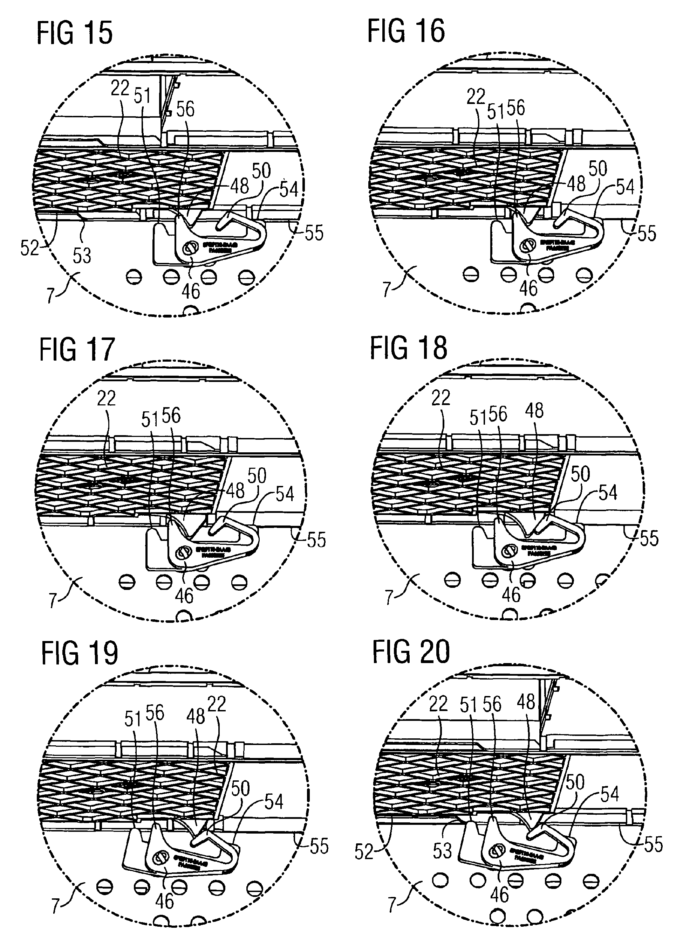

In einer darauf folgenden dritten Phase, wie sie in den Figuren 15 bis 17 gezeigt ist, kann nunmehr die Schutzplatte 22 durch die zweite Nase 56 des Betätigungsmittels gemeinsam mit der elektrischen Einschubeinheit 7 verschoben werden, bis die elektrische Einschubeinheit gemäß der Figur 15 ihre Endlage im Einschubfach 2 erreicht. Beim Erreichen dieser Endlage drückt das Sperrmittel 49 der gefederten Betätigungsnase 48 gegen eine in der Figur 5 sichtbare Schräge 57 der zweiten Aussparung 42 und die Schutzplatte 22 wird nunmehr unter der Kraft der sich vollständig entspannenden Betätigungsnase 48 noch ein Stück weiter bewegt, bis sie gemäß der Figuren 7 und 17 an dem am Boden der Verteilungsbaugruppe 18 ausgebildeten einen der Anschläge 44 anschlägt und der Sperrriegel vollständig in der zweiten Aussparung 42 eingerastet ist.

Gemäß der Figuren 7 und 8 stehen nunmehr den Haupttrennkontakt-Steckeraufnahmen 29 und den Steuerkontakt-Steckeraufnahmen 33 die Hauptstromstecker 34 bzw. die Steuerstromstecker 35 derart gegenüber dass die Hauptstromstecker 34 und die Steuerstromstecker 35, die Durchtrittsöffnungen 58 der Verteilungsbaugruppe 18 durchgreifend, in die Haupttrennkontakt-Steckeraufnahmen 29 bzw. die Steuerkontakt-Steckeraufnahmen 33 eingesteckt werden können.

Die Figuren 18 bis 22 zeigen die verschiedenen Phasen beim Herausziehen der Einschubeinheit 7 in umgekehrter Reihenfolge.

So zeigen die Figuren 18 und 19 in einer ersten Phase des Herausziehens der Einschubeinheit das Herausheben des Sperrmittels 49 aus der zweiten Aussparung 42, da nunmehr das Sperrmittel 49 mittels der ersten Nase 50 des Betätigungsmittels 46 gegen die Schräge 57 der zweiten Aussparung 42 gedrückt und dabei nach oben verschoben wird.

In einer zweiten Phase beim Herausziehen, in der die Betätigungsnase 48 in die Bewegungsbahn der ersten Nase 50 des Betätigungsmittels 46 ragt, wird nunmehr die Schutzplatte 22 gemäß der Figur 20 mit dem an der Einschubeinheit 7 gehaltenen Betätigungsmittel 46 mit bewegt, bis sie ihre in der Figur 21 gezeigte Geschlossen-Stellung erreicht, bei der der Sperrriegel wieder in der ersten Aussparung verrastet und damit gegen unbeabsichtigtes Öffnen arretiert ist.

Mittels des zweiten und ersten Kulissenabschnittes wird abschließend das Betätigungsmittel 46 wieder aus der Bewegungsbahn der gefederten Nase 48 heraus geschwenkt, so dass die Einschubeinheit 7 aus dem Einschubfach 2 entnommen werden kann.

Gemäß der Figur 24 wird das Betätigungsmittel über einen Befestigungsstift 59 an der Einschubeinheit schwenkbar gehalten, der eine Bohrung 60 des Betätigungsmittels und das Durchgangsloch 36 der Einschubeinheit 7 durchgreift. Ein in der Figur 25 gezeigter Führungsstift 61 greift bei montiertem Betätigungsmittel in das Durchgangsloch 36 37 de Einschubeinheit.

## Patentansprüche

1. Schutzvorrichtung (47) gegen Berühren elektrischer Leiter in einer Stromverteilereinheit (1), wobei die Stromverteilereinheit (1) ein Einschubfach (2) und eine in dem Einschubfach (2) verschiebbare elektrische Einschubeinheit (6; 7) aufweist,
mit zumindest einer im Einschubfach (2) aus einer Geschlossen-Stellung in eine Offen-Stellung verschiebbaren Schutzplatte (22) und
mit einem an der elektrischen Einschubeinheit (6; 7) gehaltenen Betätigungsmittel (46) zum Verschieben der Schutzplatte (22)
**dadurch gekennzeichnet, dass**
das Betätigungsmittel (46) beim Einschieben der elektrischen Einschubeinheit (6; 7) in das Einschubfach (2) unter der Einwirkung einer Steuerkulisse (45) die in ihrer Geschlossen-Stellung befindliche Schutzplatte (22) derart übergreift oder in diese eingreift, dass die Schutzplatte (22) sowohl in Richtung ihrer Offen-Stellung als auch in Richtung ihrer Geschlossen-Stellung in der Bewegungsbahn des Betätigungsmittels liegt, und
das Betätigungsmittel (46) beim Herausziehen der elektrischen Einschubeinheit (6; 7) unter der Einwirkung der Steuerkulisse (45) die Schutzplatte (22) erst nach dem Erreichen ihrer Geschlossen-Stellung wieder freigibt,
wobei die Schutzplatte (22) im Einschubfach (2) in einer parallel zu der Verschiebungsrichtung (62) der elektrischen Einschubeinheit (6; 7) verlaufenden Ebene verschiebbar ist.

2. Schutzvorrichtung (47) nach Anspruch 1,
**dadurch gekennzeichnet, dass**
die Schutzplatte (22) eine quer zu ihrer Verschiebungsrichtung (62) verlaufende Betätigungsnase (48) aufweist, die von dem Betätigungsmittel (46) beim Einschieben übergriffen und beim Herausziehen wieder freigegeben wird.

3. Schutzvorrichtung (47) nach einem der Ansprüche 1 oder 2,
**dadurch gekennzeichnet, dass**
eine durch ein Sperrmittel (49) bewirkte Verriegelung der Schutzplatte (22) in ihrer Geschlossen-Stellung und/oder in ihrer Offen-Stellung vorgesehen ist, wobei die Verschiebbarkeit der Schutzplatte (22) aus der Geschlossen-Stellung und/oder aus der Offen-Stellung nur bei Aufhebung der Verriegelung gegeben ist und wobei zum Aufheben der Verriegelung der Schutzplatte (22) ein Überführen des Sperrmittels (49) aus einer Sperr-Stellung in eine Freigabe-Stellung erforderlich ist.

4. Schutzvorrichtung (47) nach Anspruch 3,
**dadurch gekennzeichnet, dass**
das Sperrmittel (49) derart in die Bewegungsbahn des an der Einschubeinheit (6; 7) gehaltenen Betätigungsmittels (46) ragt, dass es beim Einschieben der Einschubeinheit (6; 7) und/oder beim Herausziehen der Einschubeinheit aus seiner Sperr-Stellung in seine Freigabe-Stellung überführbar ist.

5. Schutzvorrichtung (47) nach einem der Ansprüche 3 oder 4,
**dadurch gekennzeichnet, dass**
das Sperrmittel (49) an der Schutzplatte (22) bewegbar gehalten ist.

6. Schutzvorrichtung (47) nach einem der Ansprüche 3 bis 5,
**dadurch gekennzeichnet, dass**
das Sperrmittel (49) als ein Sperrriegel an der Betätigungsnase (48) angeformt ist, wobei die Betätigungsnase (48) als integraler Bestandteil der Schutzplatte (22) federnd an der Schutzplatte angeformt ist.

7. Stromverteilereinheit (1) mit einem Einschubfach (2), mit einer in dem Einschubfach (2) verschiebbaren elektrischen Einschubeinheit (6; 7) und mit einer Schutzvorrichtung (47) gegen Berühren elektrischer Leiter (26, 30, 32) in der Stromverteilereinheit (1),
**dadurch gekennzeichnet, dass**
die Schutzvorrichtung (47) nach einem der Ansprüche 1 bis 6 ausgebildet ist.

8. Stromverteilereinheit (1) nach Anspruch 7,
**dadurch gekennzeichnet, dass**
die elektrische Einschubeinheit (6; 7) zumindest eine aus einer Trennstellung in eine Kontaktstellung verschiebbare Kontakteinheit (29, 33) aufweist.

9. Stromverteilereinheit (1) nach einem der Ansprüche 7 oder 8,
**dadurch gekennzeichnet, dass**
eine fest am Einschubfach (2) fixierte Verteilungsbaugruppe (18) zur Verbindung von Feldschienen (28) mit wenigstens zwei nebeneinander angeordneten Einschubeinheiten (6; 7) vorgesehen ist, an der die Schutzplatte (22) verliersicher gehalten und bei Aufhebung der Verriegelung verschiebbar geführt ist.

10. Stromverteilereinheit (1) nach Anspruch 9,
**dadurch gekennzeichnet, dass**
an der Verteilungsbaugruppe (18) Führungsschienen (40) zum Führen der Schutzplatte (22) vorgesehen sind.

11. Stromverteilereinheit (1) nach Anspruch 10,
**dadurch gekennzeichnet, dass**
an zumindest einer der Führungsschienen (40) die Steuerkulisse (45) ausgebildet ist.

12. Stromverteilereinheit (1) nach Anspruch 11,
**dadurch gekennzeichnet, dass**
in zumindest einer der Führungsschienen (40) zum Verriegeln der Schutzplatte (22) in ihrer Geschlossen-Stellung und/oder in ihrer Offen-Stellung eine erste (41) und/oder eine zweite (42) Aussparung zum Verrasten des in seiner Sperr-Stellung befindlichen Sperrmittels (49) ausgebildet sind.

13. Stromverteilereinheit (1) nach einem der Ansprüche 9 bis 12,
**dadurch gekennzeichnet, dass**
der Verteilungsbaugruppe (18) mit einer Durchtrittsöffnung (58) zum Durchtritt der zumindest einen verschiebbaren Kontakteinheit 29, 33) der elektrischen Einschubeinheit (6; 7) versehen ist.

14. Stromverteilereinheit (1) nach einem der Anspruche 7 bis 13
**dadurch gekennzeichnet, dass**
an der Verteilungsbaugruppe (18) mehrere Schutzplatten (22) angeordnet sind.

## Claims

1. Protective device (47) for preventing contact with electrical conductors in a power distributor unit (1), wherein the power distributor unit (1) has a withdrawable compartment (2) and an electrical withdrawable unit (6; 7) that is movable in the withdrawable compartment (2),
having at least one protective plate (22) which is movable from a closed position to an open position in the withdrawable compartment (2), and
having an actuating means (46) mounted on the electrical withdrawable unit (6; 7) for moving the protective plate (22),
**characterised in that**
when the electrical withdrawable unit (6; 7) is inserted into the withdrawable compartment (2) under the action of a slotted control link (45) the actuating means (46) engages over or in the protective plate (22) disposed in its closed position in such a way that the protective plate (22) lies in the movement path of the actuating means both in the direction of its open position and in the direction of its closed position, and when the electrical withdrawable unit (6; 7) is withdrawn under the action of the slotted control link (45) the actuating means (46) does not release the protective plate (22) again until after the latter has reached its closed position,
wherein the protective plate (22) is movable in the withdrawable compartment (2) in a plane running parallel to the displacement direction (62) of the electrical withdrawable unit (6; 7).

2. Protective device (47) according to claim 1,
**characterised in that**
the protective plate (22) has an actuating projection (48) extending transversely to its displacement direction (62), which actuating projection (48) is engaged in an overlapping manner by the actuating means (46) during insertion and released again during withdrawal.

3. Protective device (47) according to one of claims 1 or 2,
**characterised in that**
provision is made for a locking of the protective plate (22) in its closed position and/or in its open position, said locking being effected by a locking means (49), wherein the ability to move the protective plate (22) from the closed position and/or from the open position is given only upon the locking being rendered inoperative and wherein a transfer of the locking means (49) from a locking position into a release position is necessary in order to render the locking of the protective plate (22) inoperative.

4. Protective device (47) according to claim 3,
**characterised in that**
the locking means (49) projects into the movement path of the actuating means (46) mounted on the withdrawable unit (6; 7) in such a way that it can be transferred from its locking position into its release position when the withdrawable unit (6; 7) is inserted and/or when the withdrawable unit is withdrawn.

5. Protective device (47) according to one of claims 3 or 4,
**characterised in that**
the locking means (49) is mounted movably on the protective plate (22).

6. Protective device (47) according to one of claims 3 to 5,
**characterised in that**
the locking means (49) is integrally moulded as a locking bolt on the actuating projection (48), with the actuating projection (48) being resiliently formed on the protective plate as an integral component of the protective plate (22).

7. Power distributor unit (1) having a withdrawable compartment (2), having an electrical withdrawable unit (6; 7) which is movable in the withdrawable compartment (2) and having a protective device (47) to prevent contact with electrical conductors (26, 30, 32) in the power distributor unit (1),
**characterised in that**
the protective device (47) is embodied according to one of claims 1 to 6.

8. Power distributor unit (1) according to claim 7,
**characterised in that**
the electrical withdrawable unit (6; 7) has at least one contact unit (29, 33) which is movable from a disconnected position into a contact position.

9. Power distributor unit (1) according to one of claims 7 or 8,
**characterised in that**
a distribution module (18) permanently fixed to the withdrawable compartment (2) for connecting field rails (28) to at least two withdrawable units (6; 7) arranged adjacent to each other is provided, wherein the protective plate (22) is captively mounted on said distribution module (18) and is guided in a movable manner upon the locking being rendered inoperative.

10. Power distributor unit (1) according to claim 9,
**characterised in that**
guide rails (40) for guiding the protective plate (22) are provided on the distribution module (18).

11. Power distributor unit (1) according to claim 10,
**characterised in that**
the slotted control link (45) is embodied on at least one of the guide rails (40).

12. Power distributor unit (1) according to claim 11,
**characterised in that**
a first (41) and/or a second (42) recess for snapping into place the locking means (49) disposed in its locking position are embodied in at least one of the guide rails (40) for locking the protective plate (22) in its closed position and/or in its open position.

13. Power distributor unit (1) according to one of claims 9 to 12,
**characterised in that**
the distribution module (18) is provided with a passage opening (58) to allow the passage of the at least one movable contact unit (29, 33) of the electrical withdrawable unit (6; 7).

14. Power distributor unit (1) according to one of claims 7 to 13,
**characterised in that**
a plurality of protective plates (22) are disposed on the distribution module (18).

## Revendications

1. Dispositif de protection (47) empêchant le contact de conducteurs électriques dans une unité de distribution de courant (1), ladite unité de distribution de courant (1) présentant un compartiment d'insertion (2) et une unité électrique insérable (6 ; 7) pouvant être déplacée dans le compartiment d'insertion (2),
comprenant au moins une plaque protectrice (22) déplaçable dans le compartiment d'insertion (2) d'une position fermée dans une position ouverte, et
comprenant un moyen d'actionnement (46) fixé sur l'unité électrique insérable (6 ; 7) et servant à déplacer la plaque protectrice (22),
**caractérisé en ce que**
lorsque l'on insère l'unité électrique insérable (6 ; 7) dans le compartiment d'insertion (2), le moyen d'actionnement (46), sous l'effet d'une coulisse de commande (45), vient chevaucher la plaque protectrice (22) se trouvant dans sa position fermée, ou s'engage dans celle-ci, de sorte que la plaque protectrice (22) se situe dans la trajectoire de déplacement du moyen d'actionnement, aussi bien en direction de sa position ouverte qu'en direction de sa position fermée, et lorsque l'on extrait l'unité électrique insérable (6 ; 7), le moyen d'actionnement (46), sous l'effet de la coulisse de commande (45), ne libère la plaque protectrice (22) qu'après avoir atteint sa position fermée,
la plaque protectrice (22) pouvant être déplacée dans le compartiment d'insertion (2) dans un plan s'étendant parallèlement au sens de déplacement (62) de l'unité électrique insérable (6 ; 7).

2. Dispositif de protection (47) selon la revendication 1, **caractérisé en ce que**
la plaque protectrice (22) présente un nez d'actionnement (48) s'étendant transversalement à son sens de déplacement (62) et qui est chevauché par le moyen d'actionnement (46) pendant l'insertion et libéré pendant l'extraction.

3. Dispositif de protection (47) selon l'une des revendications 1 ou 2,
**caractérisé en ce que**
il est prévu un verrouillage de la plaque protectrice (22) dans sa position fermée et/ou dans sa position ouverte, effectué par un moyen de blocage (49), où la possibilité de déplacement de la plaque protectrice (22) de la position fermée et/ou de la position ouverte n'est donnée que lorsque le verrouillage est supprimé et où un passage du moyen de blocage (49) d'une position de blocage dans une position de déblocage est nécessaire pour supprimer le verrouillage de la plaque protectrice (22).

4. Dispositif de protection (47) selon la revendication 3,
**caractérisé en ce que**
le moyen de blocage (49) fait saillie dans la trajectoire de déplacement du moyen d'actionnement (46) fixé sur l'unité insérable (6 ; 7), de sorte qu'il peut être amené de sa position de blocage dans sa position de déblocage pendant l'insertion de l'unité insérable (6 ; 7) et/ou pendant l'extraction de l'unité insérable.

5. Dispositif de protection (47) selon l'une des revendications 3 ou 4,
**caractérisé en ce que**
le moyen de blocage (49) est fixé de manière mobile sur la plaque protectrice (22).

6. Dispositif de protection (47) selon l'une des revendications 3 à 5,
**caractérisé en ce que**
le moyen de blocage (49) est formé en tant que verrou de blocage sur le nez d'actionnement (48), le nez d'actionnement (48), en tant que partie intégrante de la plaque protectrice (22), étant formé élastiquement sur la plaque protectrice.

7. Unité de distribution de courant (1) comprenant un compartiment d'insertion (2), comprenant une unité électrique insérable (6 ; 7) pouvant être déplacée dans le compartiment d'insertion (2), et comprenant un dispositif de protection (47) empêchant le contact de conducteurs électriques (26, 30, 32) dans l'unité de distribution de courant (1),
**caractérisée en ce que**
le dispositif de protection (47) est réalisé selon l'une des revendications 1 à 6.

8. Unité de distribution de courant (1) selon la revendication 7,
**caractérisée en ce que** l'unité électrique insérable (6 ; 7) présente au moins une unité de contact (29, 33) pouvant être déplacée d'une position de coupure dans une position de contact.

9. Unité de distribution de courant (1) selon l'une des revendications 7 ou 8,
**caractérisée en ce que**
il est prévu un module de distribution (18) solidement fixé sur le compartiment d'insertion (2) et servant à relier des barres de tableau (28) à au moins deux unités insérables (6 ; 7) disposées côte à côte, et sur lequel la plaque protectrice (22) est fixée de manière imperdable, et guidée de manière mobile lorsque le verrouillage est supprimé.

10. Unité de distribution de courant (1) selon la revendication 9,
**caractérisée en ce que**
des rails de guidage (40) servant à guider la plaque protectrice (22) sont prévus sur le module de distribution (18) .

11. Unité de distribution de courant (1) selon la revendication 10,
**caractérisée en ce que**
la coulisse de commande (45) est réalisée sur au moins l'un des rails de guidage (40).

12. Unité de distribution de courant (1) selon la revendication 11,
**caractérisée en ce que**
en vue de verrouiller la plaque protectrice (22) dans sa position fermée et/ou dans sa position ouverte, un premier (41) et/ou un deuxième évidement (42) sont réalisés dans au moins l'un des rails de guidage (40), servant à verrouiller le moyen de blocage (49) se trouvant dans sa position de blocage.

13. Unité de distribution de courant (1) selon l'une des revendications 9 à 12,
**caractérisée en ce que**
le module de distribution (18) est doté d'une ouverture de passage (58) permettant le passage de ladite au moins une unité de contact (29, 33) déplaçable de l'unité électrique insérable (6 ; 7).

14. Unité de distribution de courant (1) selon l'une des revendications 7 à 13,
**caractérisée en ce que**
plusieurs plaques protectrices (22) sont disposées sur le module de distribution (18).
